# EUROPÄISCHE PATENTSCHRIFT

(11) **EP 1 655 246 B1**
(45) Veröffentlichungstag und Bekanntmachung des Hinweises auf die Patenterteilung: **12.03.2008**
(21) Anmeldenummer: 05109247.6
(22) Anmeldetag: 05.10.2005
(51) Int. Cl.: B65G 47/44, B65G 47/52, B65G 47/71, B65B 23/12

(54) **Vorrichtung und Verfahren zum Aufteilen eines Produktestroms mittels einer Rutsche**
Device and procedure for dividing a product stream by means of a chute
Dispositif et procédure pour diviser un flot des produits à l'aide d'un glissoir

(30) Priorität: 03.11.2004 DE 102004053160
(43) Veröffentlichungstag der Anmeldung: 10.05.2006
(73) Patentinhaber: ROBERT BOSCH GMBH, 70442 Stuttgart (DE)
(72) Erfinder: Gasser, Markus, 8214 Gaechlingen (CH)

(56) Entgegenhaltungen:
- EP-A- 1 203 735
- FR-A- 611 894
- US-A- 3 058 570
- US-A- 4 469 218
- US-A- 5 641 052
- US-A- 5 967 290

## Beschreibung

### Stand der Technik

Die Erfindung betrifft eine Vorrichtung zum Aufteilen eines Produktestroms nach dem Oberbegriff des Patentanspruchs 1 sowie ein Verfahren nach Oberbegriff des Patentanspruchs 9.

Eine derartige Vorrichtung ist aus EP-A-0'066'142 bekannt. Am stromabwärtsseitigen Ende eines Zufuhrförderers ist eine in Förderrichtung geneigte Rutsche angeordnet. Diese Rutsche weist zwei quer zur Förderrichtung geneigte Flächen auf, welche in Förderrichtung in zwei getrennte Förderbahnen übergehen. Im in Förderrichtung oberen Bereich der Rutsche sind Düsen vorhanden, welche die angelieferten Produkte gezielt entweder auf die erste oder zweite geneigte Fläche umlenken. Im unteren Bereich der Rutsche grenzen sie an je einen Abtransportförderer an, wobei sie in diesem Bereich durch eine ausgeprägte Trennwand voneinander getrennt sind. Dadurch werden die zwei Teilprodukteströme nicht mehr vermischt und gelangen voneinander getrennt auf den jeweiligen Abtransportförderer.

Nachteilig an dieser Vorrichtung ist, dass die Neigung der Rutsche sowohl an den Zufuhr- wie auch an die Abtransportförderer angepasst werden muss, um den Produkten jeweils einen stufenlosen Übergang zu ermöglichen. Damit dazwischen ein genügend grosses Gefälle erreicht werden kann, um den Produktestrom erfolgreich zu trennen, muss die Rutsche relativ lang ausgebildet sein. Dies erhöht jedoch auch die Gesamtlänge der gesamten Anlage. Ein weiterer Nachteil ist, dass insbesondere längliche, schmale Produkte dazu neigen, sich auf der Rutsche zu drehen, so dass sie ihre Orientierung nicht mehr beibehalten. Dadurch verlaufen die Teilströme auf den Abtransportförderern nicht mehr in der gewünschten Ordnung.

Aus der US 3,058,570 ist bereits eine Vorrichtung bekannt, die aus einer einzigen Reihe sich bewegender Kartons oder anderer Artikel zwei parallele Reihen teilt. Dies wird erreicht durch gezieltes Anheben bzw. Absenken zweier V-förmig angeordneter Platten.

### Vorteile der Erfindung

Es ist deshalb eine Aufgabe der Erfindung, eine Vorrichtung und ein Verfahren zum Aufteilen eines Produktestroms in zwei Teilprodukteströme zu schaffen, welche die Schaffung einer kompakteren Anlage ermöglicht.

Diese Aufgabe löst eine Vorrichtung mit den Merkmalen des Patentanspruchs 1 beziehungsweise ein Verfahren mit den Merkmalen des Patentanspruchs 9.

Die erfindungsgemässe Vorrichtung zum Aufteilen eines entlang einer Hauptförderrichtung transportierten Produktestroms in zwei Teilprodukteströme weist einen Zufuhrförderer zur Zufuhr des Produktestroms, zwei Abtransportförderer zur Weiterförderung der zwei Teilprodukteströme und eine zwischen Zufuhrförderer und Abtransportförderer angeordnete Rutsche mit zwei geneigten Rutschflächen zur Trennung des Produktestroms in die zwei Teilströme auf. Die zwei Rutschflächen sind annähernd senkrecht zur Hauptförderrichtung so geneigt, dass die Produkte des Produktestroms vom Zufuhrförderer in einem Winkel zur Hauptförderrichtung an die Abtransportförderer übergeben werden.

Im erfindungsgemässen Verfahren rutschen die Produkte des Produktestroms, nachdem sie durch seitliche Krafteinwirkung wahlweise auf eine der zwei geneigten Rutschflächen gelenkt wurden, in einem Winkel zur Hauptförderrichtung auf den Rutschflächen hinunter und werden den Abtransportförderern in einer annähernd quer zur Hauptförderrichtung verlaufenden Richtung übergeben.

Der Zufuhrförderer weist erfindungsgemäss seitliche Führungsmittel zur Führung der Produkte des Produktestroms auf, wobei die Führungsmittel in Hauptförderrichtung in den Bereichen der Rutsche hineinragen und wobei sie in diesem Bereich eine untere Kante aufweisen, welche oberhalb einer Förderebene des Zufuhrförderers endet.

Durch die seitliche Trennung und Übergabe der einzelnen Produkte lässt sich die gesamte Anlagenlänge minimieren. Die Rutsche beansprucht keinen zusätzlichen Platz.

Da die Produkte seitlich und nicht stirnseitig in Förderrichtung der Gleitfläche zu den Abtransportförderern rutschen, behalten sie ihre Ausrichtung bei und werden nicht gedreht. Dies ist insbesondere bei länglichen Produkten vorteilhaft. Eine Verdrehung kann insbesondere dann vermieden bzw. korrigiert werden, wenn die unteren Bereiche der Rutsche flach auslaufend ausgebildet sind.

Die erfindungsgemässe Vorrichtung ermöglicht es, nacheinander angelieferte Produkte schindelartig weiterzutransportieren, wobei eine hohe Präzision in der Ausrichtung und im Schindelgrad, d.h. in der Überlappung der einzelnen Produkte, erzielt wird. Die Schindelung erfolgt ohne dass zusätzliche Mittel hierfür eingesetzt werden müssten.

Diese Genauigkeit wird noch erhöht, wenn im Bereich der Rutsche ein Zwischenförderer vorhanden ist, auf welchem die Produkte vor dem Abkippen zu einer der Rutschflächen hin gefördert werden.

Weitere vorteilhafte Weiterbildungen der erfindungsgemäßen Vorrichtung sind in den abhängigen Patentansprüchen angegeben.

### Zeichnung

Ein Ausführungsbeispiel der Erfindung ist in der Zeichnung dargestellt und wird nachfolgend näher erläutert. Es zeigen:
- Figur 1: eine Prinzipskizze einer erfindungsgemässen Vorrichtung in perspektivischer Darstellung und
- Figur 2: eine Prinzipskizze der Vorrichtung gemäss Figur 1 in einer Schnittdarstellung.

### Beschreibung des Ausführungsbeispiels

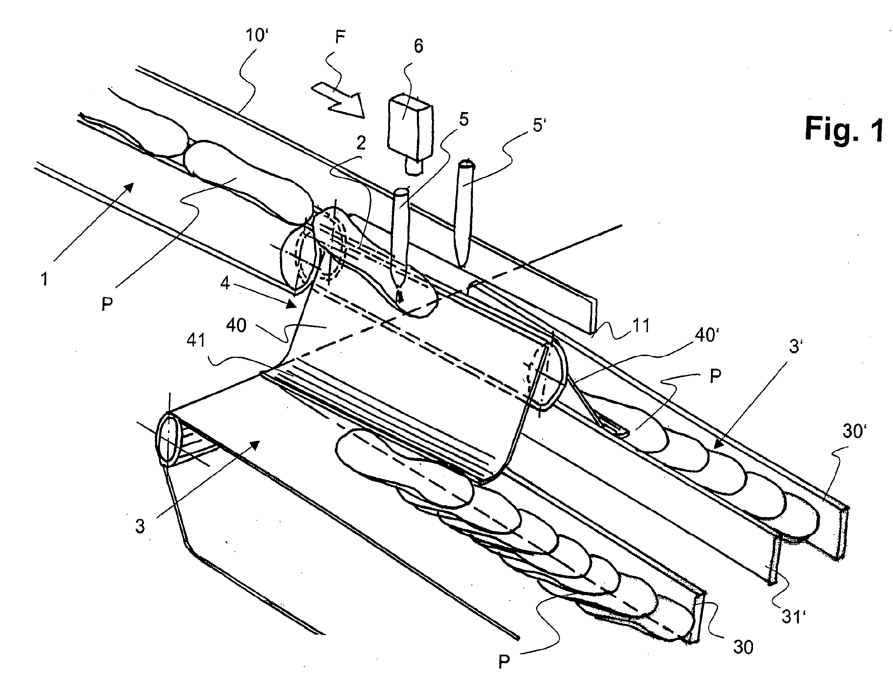

In Figur 1 ist eine erfindungsgemässe Vorrichtung dargestellt. Sie weist im wesentlichen einen Zufuhrförderer 1, einen Zwischenförderer 2, eine Rutsche 4 und zwei Abtransportförderer 3, 3' auf. Im Bereich des Zwischenförderers 2 und der Rutsche 4 sind Erkennungsmittel 6 und Ablenkmittel 5, 5' angeordnet.

Auf dem Zufuhrförderer 1 werden Produkte P in einem Produktestrom entlang einer Hauptförderrichtung F zugeführt. Die Produkte P sind in diesem Beispiel längliche Biskuits, sogenannte Löffelbiskuits, deren Längsrichtung parallel zur Hauptförderrichtung F verlaufen. Selbstverständlich lassen sich aber auch anders geformte Produkte mittels dieser Vorrichtung transportieren und in Teilströme aufteilen.

Der Zufuhrförderer 1 ist ein Förderer bekannter Art. Er kann beispielsweise durch ein oder mehrere endlos umlaufende Stränge 12, 13, wie beispielsweise Rundriemen, Flachbänder, Ketten oder Stahlseile gebildet sein. Im hier dargestellten bevorzugten Beispiel wird er durch zwei Rundriemen gebildet, welche parallel, aber beabstandet zueinander geführt sind. Vorzugsweise bildet der Zufuhrförderer eine horizontal und geradlinig verlaufende Förderebene. Sie kann jedoch auch geneigt und/oder kurvenförmig ausgebildet sein.

Vorzugsweise sind mindestens im Bereich des in Hauptförderrichtung unteren, d.h. stromabwärtsseitigen Endes des Zufuhrförderers 1 seitliche Führungsmittel in Form von Seitenführungen 10, 10' vorhanden. Diese können beispielsweise durch Leitbleche gebildet sein, welche über die Förderebene ragen.

An das untere Ende des Zufuhrförderers 1 grenzt der Zwischenförderer 2 an. Auch dieser kann beliebig ausgestaltet sein. Vorzugsweise ist jedoch auch er durch mindestens einen endlos umlaufenden Strang gebildet. Im hier dargestellten Beispiel ist er ein Rundriemen, welcher mit seinem stromaufwärtsseitigen oberen Ende zwischen die stromabwärtsseitigen unteren Enden der Stränge 12, 13 des Zufuhrförderers 1 ragt. Dadurch wird ein lückenloser Übergang der Produkte P vom Zufuhrförderer 1 zum Zwischenförderer 2 gewährleistet. Vorzugsweise wird der Zwischenförderer 2 mit der gleichen Geschwindigkeit, oder im Falle eines getakteten Antriebs, im gleichen Takt wie der Zufuhrförderer 1 betrieben.

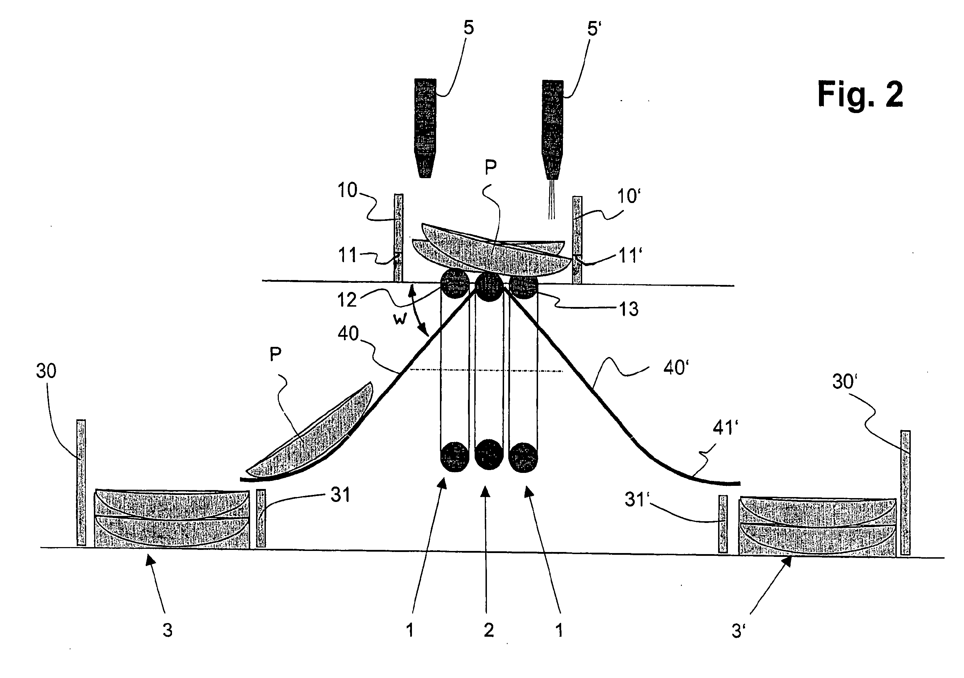

Auf dem Zwischenförderer 2 werden die Produkte P vorzugsweise entlang ihrer Mittellinie getragen, wobei die Auflagefläche üblicherweise relativ schmal, vorzugsweise praktisch linienförmig, ausgebildet ist. Auch der Zwischenförderer 2 verläuft vorzugsweise entlang seiner Förderstrecke horizontal und geradlinig. Die oben erwähnten Seitenführungen 10, 10' erstrecken sich mindestens über einen Teil der Länge, vorzugsweise über die gesamte Länge, des Zwischenförderers 2. Mindestens in diesem Bereich enden die unteren Kanten 11, 11' der Seitenführungen 10, 10' jedoch beabstandet oberhalb der Förderebene des Zufuhrförderers 1 bzw. des Zwischenförderers 2. Dies ist auch in Figur 2 gut erkennbar.

Die Rutsche 4 befindet sich im Bereich des Zwischenförderers. Sie weist zwei geneigte Rutschflächen 40, 40'auf, welche beidseits des Zwischenförderers 2 angeordnet sind. Die Rutsche 4 besteht vorzugsweise aus einem Blech mit glatter Oberfläche oder einem geeignet beschichteten Material, welches ein möglichst reibungsfreies Hinuntergleiten der Produkte ermöglicht.

In diesen Bereich ist mindestens ein Erkennungsmittel 6 zur Erkennung der Produkte P angeordnet. Es kann sich dabei beispielsweise um einen elektrischen Taster handeln, welcher jeweils erkennt, wann ein Produkt P angeliefert wird.

In Förderrichtung stromabwärts zum Erkennungsmittel 6 ist mindestens ein, hier sind zwei Ablenkmittel 5, 5' vorhanden. Diese können, wie hier dargestellt, Blasdüsen sein. Es lassen sich jedoch auch mechanische Mittel einsetzen. Die Ablenkmittel 5, 5' lenken die einzelnen Produkte P auf die eine oder andere Seite der Rutsche 4, so dass die Produkte P entweder auf der ersten oder der zweiten Rutschfläche 40, 40' hinunterrutschen. Für diese Ablenkung genügt es bereits, dass ausserhalb der durch den Zwischenförderer 2 unterstützten Mittellinie des Produkts P eine seitliche Kraft auf das Produkt P einwirkt, beispielsweise durch einen Luftstrom aus der Blasdüse. Dadurch kippt das Produkt P in die gewünschte Richtung und gleitet die entsprechende Rutschfläche 40, 40' hinunter. In welche Richtung abgelenkt wird, lässt sich über eine Steuerung nach Massgabe des Erkennungsmittels 6 gezielt wählen. Dabei kann beispielsweise jedes zweite Produkt P in die entgegengesetzte Richtung abgelenkt werden. Es lassen sich jedoch auch kompliziertere Auswahlkriterien für die Ablenkung wählen.

Die zwei Rutschflächen 40, 40' sind annähernd, hier möglichst genau, senkrecht zur Hauptförderrichtung F geneigt. Dadurch rutschen die Produkte P in einem Winkel zur Hauptförderrichtung nach unten. Ohne Vorwärtsimpuls, welchen sie hier durch den Zwischenförderer 2 erhalten haben, würden sie senkrecht zur Hauptförderrichtung nach unten gleiten.

Die Rutschflächen 40, 40' weisen vorzugsweise einen relativ grossen Neigungswinkel w von 25 bis 50 ° auf. Parallel zur Hauptförderrichtung F sind die Rutschflächen 40, 40' jedoch vorzugsweise nicht oder nur sehr leicht geneigt. Im unteren Bereich gehen die Rutschflächen 40, 40' in Auslaufflächen 41, 41' über, welche ein geringeres Gefälle aufweisen. Vorzugsweise bilden die Auslaufflächen 41, 41' einen stetigen Übergang vom relativ grossen Gefälle der Rutschflächen 40, 40' zu einem annähernd horizontal verlaufenden Endbereich. Dies ist in Figur 2 gut erkennbar. Auch die Auslaufflächen 41, 41' weisen parallel zur Hauptförderrichtung F praktisch kein oder nur ein sehr geringes Gefälle auf.

An die Rutsche 4 beidseitig angrenzend verlaufen die Abtransportförderer 3, 3'. Der Übergang wird durch die flach auslaufenden Auslaufflächen 41, 41' gebildet, welche beispielsweise knapp über den Förderebenen der zwei Abtransportförderer 3, 3' und in diese hineinragend enden können. Vorzugsweise verlaufen die unteren Längskanten der Auslaufflächen 41, 41' parallel zur Förderrichtung der jeweiligen Abtransportförderer 3, 3'.

Die Abtransportförderer 3, 3' lassen sich durch bekannte, beliebig ausgestaltete Förderer bilden. Im hier dargestellten Beispiel sind sie endlos umlaufende Bandförderer. Die Abtransportförderer 3, 3' verlaufen vorzugsweise parallel versetzt zum Zufuhrförderer 1, wobei ihre Förderebenen nun annähernd bzw. mindestens um die Höhe der Rutsche 4 tiefer liegen als die Förderebene des Zufuhrförderers 1. Vorzugsweise sind auch diese Abtransportförderer 3, 3' beidseitig mit Seitenführungen 30, 30', 31, 31' versehen, um die auf ihnen transportierten Teilprodukteströme seitlich geführt weg zu transportieren.

Werden die Abtransportförderer 3, 3' mit einer langsameren Geschwindigkeit bzw. einem anderen Takt als der Zufuhrförderer 1 betrieben, so lassen sich die Produkte P schindeln bzw. schichten. Die Schindelung erfolgt dabei bereits bei der Übergabe der einzelnen Produkte P von der Rutsche 4 auf die Abtransportförderer 3, 3', ohne dass zusätzliche Hilfsmittel notwendig sind.

Diese Übergabe der Produkte P erfolgt unabhängig von einer allfälligen Schindelung vorzugsweise in einer Richtung annähernd senkrecht zur Hauptförderrichtung F. Dies wird einerseits durch die annähernd senkrecht zur Hauptförderrichtung F ausgerichteten Rutschebenen der Rutsche 4 und auch durch die flach auslaufenden Auslaufflächen 41, 41' erzielt. Dank diesen Auslaufflächen 41, 41' werden die Produkte P in ihrem Fall gebremst und falls sie sich gedreht haben, in den wie Auffangschalen wirkenden Auslaufflächen 41, 41' wieder senkrecht ausgerichtet. Die Neigung der Auslaufflächen 41, 41' und der noch vorhandene Impuls der Produkte P genügt, dass die Produkte P ohne weitere Hilfsmittel auf die Abtransportförderer 3, 3' gelangen können.

Die erfindungsgemässe Vorrichtung kann in vielfältiger Weise modifiziert bzw. abgewandelt werden, ohne vom Erfindungsgedanken abzuweichen. Insbesondere ist es möglich, keinen Zwischenförderer 2 zu verwenden und diesen beispielsweise durch eine Totplatte zu ersetzen, entlang welcher die Produkte dank ihres vorher erhaltenen Impulses weitergleiten. Diese Totplatte lässt sich auch leicht geneigt ausbilden, um den Produkten einen leichten Hangabtrieb zu geben.

### Bezugszeichenliste

- 1: Zufuhrförderer
- 10: Rechte Seitenführung
- 10': Linke Seitenführung
- 11: Rechte untere Kante
- 11': Linke untere Kante
- 12: Rechter Strang
- 13: Linker Strang
- 2: Zwischenförderer
- 3: Erster Abtransportförderer
- 30: Linke Seitenführung
- 31: Rechte Seitenführung
- 3': Zweiter Abtransportförderer
- 30': Linke Seitenführung
- 31': Rechte Seitenführung
- 4: Rutsche
- 40: Erste Rutschfläche
- 40': Zweite Rutschfläche
- 41: Erste Auslauffläche
- 41': Zweite Auslauffläche
- 5: Erstes Ablenkmittel
- 5': Zweites Ablenkmittel
- 6: Erkennungsmittel
- P: Produkt
- F: Hauptförderrichtung

## Patentansprüche

1. Vorrichtung zum Aufteilen eines entlang einer Hauptförderrichtung (F) transportierten Produktestroms in zwei Teilprodukteströme, wobei die Vorrichtung einen Zufuhrförderer (1) zur Zufuhr des Produktestroms, zwei Abtransportförderer (3, 3') zur Weiterförderung der zwei Teilprodukteströme und eine zwischen Zufuhrförderer (1) und Abtransportförderer (3, 3') angeordnete Rutsche (4) mit zwei geneigten Rutschflächen (40, 40') zur Trennung des Produktestroms in die zwei Teilprodukteströme aufweist, wobei die zwei Rutschflächen (40, 40') annähernd senkrecht zur Hauptförderrichtung (F) so geneigt sind, dass die Produkte (P) des Produktestroms vom Zufuhrförderer (1) in einem Winkel, vorzugsweise einem senkrechten Winkel, zur Hauptförderrichtung (F) an die Abtransportförderer (3, 3') übergebbar sind, **dadurch gekennzeichnet, dass** der Zufuhrförderer (1) seitliche Führungsmittel (10, 10') zur Führung der Produkte (P) des Produktestroms aufweist, wobei die Führungsmittel (10, 10') in Hauptförderrichtung (F) in den Bereich der Rutsche (4) hineinragen und wobei sie in diesem Bereich eine untere Kante (11, 11') aufweisen, welche oberhalb einer Förderebene des Zufuhrförderers (1) endet.

2. Vorrichtung nach Anspruch 1, **dadurch gekennzeichnet, dass** ein Zwischenförderer (2) vorhanden ist und dass die Rutschflächen (40, 40') der Rutsche (4) beidseits dieses Zwischenförderers (2) angeordnet sind.

3. Vorrichtung nach Anspruch 2, **dadurch gekennzeichnet, dass** der Zufuhrförderer (1) durch zwei endlos umlaufende erste Stränge (12, 13) gebildet ist, dass der Zwischenförderer (2) ein endlos umlaufender zweiter Strang ist und dass der zweite Strang mit seinem in Hauptförderrichtung (F) oberen Ende zwischen die unteren Enden der ersten Stränge (12, 13) ragt.

4. Vorrichtung nach einem der Ansprüche 1 bis 3, **dadurch gekennzeichnet, dass** die Rutsche (4) annähernd senkrecht zur Hauptförderrichtung (F) an die Abtransportförderer (3, 3') angrenzt.

5. Vorrichtung nach einem der Ansprüche 1 bis 4, **dadurch gekennzeichnet, dass** jede der zwei geneigten Rutschflächen (40, 40') an ihrem unteren, den Abtransportförderern (3, 3') hin gerichteten Ende in eine Auslauffläche (41, 41') übergeht, wobei die Rutschfläche (40, 40') ein grösseres Gefälle aufweist als die Auslauffläche (41, 41').

6. Vorrichtung nach Anspruch 5, **dadurch gekennzeichnet, dass** die Auslauffläche (41, 41') stetig an die Rutschfläche (40, 40') angrenzt und dass sie zum Abtransportförderer (3, 3') hin flach auslaufend ausgebildet ist.

7. Vorrichtung nach einem der Ansprüche 1 bis 6, **dadurch gekennzeichnet, dass** im Bereich der Rutschflächen (40, 40') Ablenkmittel (5, 5') vorhanden sind, um durch eine auf die Produkte (P) des Produktestroms wirkende Kraft diese wahlweise auf eine der zwei Rutschflächen (40, 40') zu lenken und dass in Hauptförderrichtung (F) vor den Ablenkmitteln (5, 5') ein Erkennungsmittel (6) zur Erkennung der Produkte (P) angeordnet ist, wobei die Ablenkmittel (5, 5') nach Massgabe dieses Erkennungsmittels (6) ansteuerbar sind.

8. Vorrichtung nach Anspruch 7, **dadurch gekennzeichnet, dass** diese Ablenkmittel (5, 5') Luftdüsen sind, welche beabstandet zueinander angeordnet sind.

9. Verfahren zum Aufteilen eines entlang einer Hauptförderrichtung (F) transportierten Produktestroms in zwei Teilprodukteströme, wobei die Produkte (P) des Produktestroms zu einer Rutsche (4) mit zwei geneigten Rutschflächen (40, 40') geführt wird, die Produkte (P) durch Krafteinwirkung wahlweise auf eine der zwei geneigten Rutschflächen (40, 40') gelenkt werden und wobei die Produkte (P) von der Rutsche (4) an zwei Abtransportförderer (3, 3') übergeben werden und auf diesen in den zwei Teilprodukteströme weggeführt werden, wobei die Produkte (P) auf den Rutschflächen (40, 40') in einem Winkel zur Hauptförderrichtung (F) hinunterrutschen und den Abtransportförderern (3, 3') in einer annähernd quer zur Hauptförderrichtung (F) verlaufenden Richtung übergeben werden, **dadurch gekennzeichnet, dass** die Produkte (P) des Produktstroms durch seitliche Führungsmittel (10, 10') des Zufuhrförderers (1) geführt werden, wobei die Führungsmittel (10, 10') in Hauptförderrichtung (F) in den Bereich der Rutsche (4) hineinragen und wobei sie in diesem Bereich eine untere Kante (11, 11') aufweisen, welche oberhalb einer Förderebene des Zufuhrförderers (1) endet.

## Claims

1. Apparatus by means of which a product stream transported along a main conveying direction (F) is divided up into two partial product streams, it being the case that the apparatus has a feed conveyor (1) for feeding the product stream, two removal conveyors (3, 3') for conveying the two partial product streams further, and a chute (4) which is arranged between the feed conveyor (1) and removal conveyors (3, 3') and has two inclined surfaces (40, 40'), for separating the product stream into the two partial product streams, and that the two chute surfaces (40, 40') are inclined more or less perpendicularly to the main conveying direction (F) such that the products (P) of the product stream can be transferred to the removal conveyors (3, 3') from the feed conveyor (1) at an angle, preferably at right angles, to the main conveying direction (F), **characterized in that** the feed conveyor (1) has lateral guide means (10, 10') for guiding the products (P) of the product stream, the guide means (10, 10') projecting into the region of the chute (4) in the main conveying direction (F) and having, in this region, a bottom edge (11, 11') which terminates above a conveying plane of the feed conveyor (1).

2. Apparatus according to Claim 1, **characterized in that** an intermediate conveyor (2) is provided, and **in that** the surfaces (40, 40') of the chute (4) are arranged on both sides of this intermediate conveyor (2).

3. Apparatus according to Claim 2, **characterized in that** the feed conveyor (1) is formed by two endlessly circulating first strands (12, 13), **in that** the intermediate conveyor (2) is an endlessly circulating second strand, and **in that** the second strand has its top end, as seen in the main conveying direction (F), projecting between the bottom ends of the first strands (12, 13).

4. Apparatus according to one of Claims 1 to 3, **characterized in that** the chute (4) borders the removal conveyors (3, 3') more or less perpendicularly to the main conveying direction (F).

5. Apparatus according to one of Claims 1 to 4, **characterized in that** each of the two inclined chute surfaces (40, 40') merges into a runout surface (41, 41') at its bottom end, which is directed towards the removal conveyors (3, 3'), the chute surface (40, 40') sloping to a greater extent than the runout surface (41, 41').

6. Apparatus according to Claim 5, **characterized in that** the runout surface (41, 41') borders the chute surface (40, 40') in a continuous manner, and **in that** it is designed to terminate flat in the direction of the removal conveyor (3, 3').

7. Apparatus according to one of Claims 1 to 6, **characterized in that** deflecting means (5, 5') are provided in the region of the chute surfaces (40, 40') in order for a force which is acting on the products (P) of the product stream to direct the same optionally onto one of the two chute surfaces (40, 40'), and **in that** a detecting means (6) for detecting the products (P) is arranged upstream of the deflecting means (5, 5'), as seen in the main conveying direction (F), it being possible for the deflecting means (5, 5') to be activated in accordance with this detecting means (6).

8. Apparatus according to Claim 7, **characterized in that** these deflecting means (5, 5') are air nozzles which are spaced apart from one another.

9. Method by means of which a product stream transported along a main conveying direction (F) is divided up into two partial product streams, it being the case that the products (P) of the product stream are guided to a chute (4) with two inclined surfaces (40, 40') and the products (P) are directed, by the action of force, optionally onto one of the two inclined chute surfaces (40, 40'), that the products (P) are transferred onto two removal conveyors (3, 3') from the chute (4) and are guided away, on these removal conveyors, in the two partial product streams, and that the products (P) slide down the chute surfaces (40, 40') at an angle to the main conveying direction (F) and are transferred to the removal conveyors (3, 3') in a direction which runs more or less transversely to the main conveying direction (F), **characterized in that** the products (P) of the product stream are guided by lateral guide means (10, 10') of the feed conveyor (1), the guide means (10, 10') projecting into the region of the chute (4) in the main conveying direction (F) and having, in this region, a bottom edge (11, 11') which terminates above a conveying plane of the feed conveyor (1).

## Revendications

1. Dispositif pour répartir un flux de produits transportés dans une direction principale de transfert (F), en deux flux partiels de produits,
le dispositif ayant un convoyeur d'alimentation (1) pour fournir le flux de produits, deux convoyeurs d'évacuation (3, 3') pour évacuer les deux flux partiels de produits et une glissoire (4) installée entre le convoyeur d'alimentation (2) et les convoyeurs d'évacuation (3, 3'), cette glissoire ayant deux surfaces de glissement (40, 40'), inclinées, pour séparer le flux de produits en ses deux flux partiels de produits,
les deux surfaces de glissement (40, 40') étant inclinées pratiquement perpendiculairement à la direction principale de transfert (F) pour que les produits (P) du flux de produits fassent par rapport au convoyeur d'alimentation (1), un angle, de préférence un angle droit, pour rejoindre les convoyeurs d'évacuation (3, 3') dans la direction principale de transfert (F),
**caractérisé en ce que**
le convoyeur d'alimentation (1) comporte des moyens de guidage latéraux (10, 10') pour guider des produits (P) du flux de produits,
les moyens de guidage (10, 10') pénétrant selon la direction principale de transfert (F) dans la zone de la glissoire (4) et dans cette zone les moyens de guidage ont une arrête inférieure (11, 11') se terminant au-dessus d'un plan de transfert du convoyeur d'alimentation (1).

2. Dispositif selon la revendication 1,
**caractérisé par**
un convoyeur intermédiaire (2) et les surfaces de glissement (40, 40') de la glissoire (4) se trouvent de part et d'autre de ce convoyeur intermédiaire (2).

3. Dispositif selon la revendication 2,
**caractérisé en ce que**
le convoyeur d'alimentation (1) est formé par deux premiers cordons sans fin (12, 13') circulants,
le convoyeur intermédiaire (2) est un second cordon sans fin, circulant, et le second cordon pénètre par son extrémité supérieure dans la direction principale de transfert (F) entre les extrémités inférieures des premiers cordons (12, 13).

4. Dispositif selon l'une des revendications 1 à 3,
**caractérisé en ce que**
la glissoire (4) est sensiblement adjacente aux convoyeurs d'évacuation (3, 3'), sensiblement perpendiculairement à la direction principale de transfert (F).

5. Dispositif selon l'une des revendications 1 à 4,
**caractérisé en ce que**
chacune des deux surfaces de glissement (40, 40') inclinées, passe au niveau de son extrémité inférieure tournée vers les convoyeurs d'évacuation (3, 3') dans une surface de sortie (41, 41'),
la surface de glissement (40, 40') ayant une pente plus importante que la surface de sortie (41, 41').

6. Dispositif selon la revendication 5,
**caractérisé en ce que**
la surface de sortie (41, 41') est adjacente de façon continue à la surface de glissement (40, 40') et elle se termine à plat vers le convoyeur d'évacuation (3, 3').

7. Dispositif selon l'une des revendications 1 à 6,
**caractérisé en ce qu'**
au niveau des surfaces de glissement (40, 40') il y a des moyens de déviation (5, 5') pour les guider au choix sur l'une des deux surfaces de glissement (40, 40') en appliquant une force sur les produits (P) du flux de produits, et dans la direction principale de transfert (F), avant les moyens de déviation (5, 5') il est prévu un moyen de reconnaissance (6) pour reconnaître les produits (P),
les moyens de déviation (5, 5') étant commandés en fonction de l'indication de mesure de ce moyen de reconnaissance (6).

8. Dispositif selon la revendication 7,
**caractérisé en ce que**
les moyens de déviation (5, 5') sont des buses à air écartées les unes des autres.

9. Procédé de répartition d'un flux de produits transportés le long d'une direction principale de transfert (F) en deux flux partiels de produits,
les produits (P) du flux de produits conduits sur une glissoire (4) ayant deux surfaces de glissement (40, 40') inclinées, étant dirigés par l'action d'une force, sélectivement sur l'une des deux surfaces de glissement inclinées (40, 40') et
les produits (P) étant transférés de la glissoire (4) sur deux convoyeurs d'évacuation (3, 3') pour être évacués par ceux-ci sous la forme de deux flux partiels de produits,
les produits (P) glissant sur les surfaces de glissement (40, 40') suivant un angle par rapport à la direction principale de transfert (F) et ils sont transférés vers les convoyeurs d'évacuation (3, 3') dans une direction sensiblement transversale à la direction principale de transfert (F),
**caractérisé en ce que**
les produits (P) du flux de produits sont guidés par des moyens de guidage latéraux (10, 10') du convoyeur d'alimentation (1),
les moyens de guidage (10, 10') pénétrant dans la zone de la glissoire (4) dans la direction principale de transfert (F) et ces moyens ont dans cette zone, une arrête inférieure (11, 11') qui se termine au-dessus d'un plan de transfert du convoyeur d'alimentation (1).
